(19) Europäisches Patentamt
European Patent Office
Office européen des brevets

(11) **EP 4 513 670 A1**

(12) **EUROPEAN PATENT APPLICATION**

(43) Date of publication:
**26.02.2025 Bulletin 2025/09**

(21) Application number: **23382863.1**

(22) Date of filing: **22.08.2023**

(51) International Patent Classification (IPC):
**H01Q 1/22** (2006.01)    **H01Q 9/04** (2006.01)
**G01N 27/22** (2006.01)    **G06K 19/07** (2006.01)
**H01Q 9/42** (2006.01)    **H01Q 7/00** (2006.01)

(52) Cooperative Patent Classification (CPC):
**H01Q 9/0421; G01N 27/02; G06K 19/0717;
H01Q 1/2225;** H01Q 7/005; H01Q 9/42

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fundacio per a la Universitat Oberta de Catalunya
(UOC)
08035 Barcelona (ES)**

(72) Inventors:
• **LOPEZ SORIANO, Sergio
  08320 EL MASNOU (ES)**
• **MELIÀ SEGUÍ, Joan Antoni
  08024 BARCELONA (ES)**
• **VILAJOSANA GUILLÉN, Xavier
  08440 CARDEDEU (ES)**

(74) Representative: **ZBM Patents - Zea, Barlocci & Markvardsen
Rambla de Catalunya, 123
08008 Barcelona (ES)**

(54) **FLUID SENSING SYSTEM**

(57)    There is provided a fluid sensing system comprising a planar antenna, the antenna comprising a non-fluid-absorbing substrate, the non-fluid-absorbing substrate comprising a seat, the seat configured to embed a fluid-absorbing element; and a conductor layer on the non-fluid-absorbing substrate, the planar antenna having a resonant frequency; wherein the planar antenna is configured to vary the resonant frequency based on fluid absorbed by the fluid-absorbing element. There is also provided a method for determining fluid properties, the method comprising providing the fluid sensing system; embedding a fluid-absorbing element in the seat of the non-fluid-absorbing substrate; and determining fluid properties or fluid dielectric properties, of a fluid absorbed by the fluid-absorbing element based at least on a frequency of maximum signal reception power, the signal reception power being at least a part of the signal power of the transmitted signal, received by a reception antenna.

Fig. 1

**Description**

**BACKGROUND**

The present disclosure is directed to the field of fluid sensing systems.

In contact with fluids, fluid-absorbing elements absorb the fluids changing the values of their dielectric properties, such as relative permittivity ($\varepsilon_r$) and loss tangent (tan$\delta$). Variations in the values of the dielectric properties of microwave circuits and antennas substrates modify the resonant frequency and the electromagnetic losses of such devices, which affects their performance. Porous solid materials are capable of absorbing liquids, which detunes the microwave devices exposed to external conditions such as humidity, rain, sweat, proximity to water pipes or other liquids. Some contributions have exploited the detuning to provide humidity sensors measuring the moisture content in lubricating oil, beam steering, flow sensors, and characterization of liquids.

The prior art solutions present disadvantages related to the size of the circuits and antennas, the accuracy of the measurements and the performance loss given by the porous solid materials when exposed to determined liquids or fluids.

It is an object of the present disclosure to provide improved wireless systems and methods to characterize fluids.

**SUMMARY OF THE DISCLOSURE**

In a first aspect of the disclosure, there is provided a fluid sensing system. The fluid sensing system may be understood as a system for wirelessly, i.e., via electromagnetic waves, sense the presence or dielectric properties of a fluid. For example, a fluid may comprise water, rainwater, sweat, oil, gas, or CO2.

The fluid sensing system comprises a planar antenna comprising a non-fluid-absorbing substrate comprising a seat, the seat configured to embed a fluid-absorbing element; and a conductor layer, or first conductor layer, or top conductor layer, on the non-fluid-absorbing substrate, the planar antenna having a resonant frequency. The conductor layer may be made of a conductor and may comprise a type of material that allows the flow of charge, or electric current, in one or more directions. Materials made of metal are common electrical conductors. In the present specification the wording "conductor material" may be understood as electrical conductor or conductor.

A planar antenna may be defined as a two-dimensional antenna with active and parasitic elements on one plane. Planar antennas may include microstrip antennas, patch antennas, printed circuit board antennas, PIFA antennas, loop antennas, slot antennas, or dipoles. The planar antennas may be shaped as "patches" which may be square, triangular, or circular. The planar antenna of the fluid sensing system is configured on the non-fluid-absorbing substrate. On the non-fluid-absorbing substrate may comprise constructed or mounted on the non-fluid-absorbing substrate. For example, a planar antenna on the non-fluid-absorbing substrate may comprise a metallized top conductor layer resting on the non-fluid-absorbing substrate. The planar antenna has at least one resonant frequency. The planar antenna is therefore configured to resonate at a resonant frequency. The resonant frequency may be comprised in a range of 800-1000 MHz, or 1-3 GHz, or 3-10 GHz, 10-30 GHz, 30-100 GHz. The planar antenna receives or transmits the maximum signal power at a frequency of optimum transmission or FOT, which may be a desired design frequency, or working frequency. The FOT may be comprised in a range of 800-1000 MHz, or 1-3 GHz, or 3-10 GHz, 10-30 GHz, 30-100 GHz.

The non-fluid-absorbing substrate comprises a non-fluid-absorbing substrate which is impermeable to fluids, the fluids comprising water, beverages, rain water, body fluids, oils, chemical products, liquids, gases, CO2. The non-fluid-absorbing substrate may comprise a laminate of a dielectric material or a dielectric, such as Polytetrafluoroethylene (PTFE), polyethylene (PET), or any commercial printed circuit board (PCB) substrate and may comprise properties such as dielectric constant ($\varepsilon r$), dissipation factor (tan$\delta$), thermal coefficient of $\varepsilon_r$, volume resistivity, surface resistivity, electrical strength, moisture absorption, density, amongst others.

The non-fluid-absorbing substrate comprises a seat, or cavity or hole, configured to embed a fluid-absorbing element. Configured to embed a fluid-absorbing element may comprise configured to house, configured to receive, configured to seat, and may comprise a seat of dimensions allowing a fluid-absorbing element, such as papers, sponges, textiles (cotton, wool, polyester, and other fabrics), and hydrogels, to be positioned or embedded in the seat 7. The seat may present dimensions substantially equal to the dimensions of the non-fluid-absorbing substrate. The seat may comprise dimensions such as 10 mm $\times$ 10 mm $\times$ 1 mm (PIFA).

The planar antenna is configured to vary the resonant frequency based on fluid absorbed by the fluid-absorbing element. The fluid sensing system is thereby configured to sense a presence or to sense properties of the fluid based on at least a part of volume of fluid absorbed by the fluid-absorbing element. Based on fluid may comprise depending on a volume of fluid or as a function of incoming or absorbed fluid. In examples, the fluid sensing system comprises the fluid-absorbing element in the seat. A fluid-absorbing element may be inserted in the seat and, in contact with fluid, the fluid is transferred to the fluid sensing system, or the fluid can be injected into the fluid-absorbing element. The planar antenna in the fluid sensing system varies the frequency of the antenna realized gain (RG) peak. The fluid sensing system exploits thereby variations in the values of the dielectric properties of the fluid sensing system by a modification of the planar antenna resonant frequency. The fluid sensing system may be used as explained in the examples below.

The fact that the fluid-absorbing element may be provided in a seat in the non-fluid-absorbing substrate allows providing an assembly formed by the non-fluid-absorbing substrate and the fluid-absorbing element. The assembly varies the dielectric properties of an assembly substrate on which the planar antenna is built. The planar antenna is therefore configured to vary the resonance frequency upon the presence of a fluid in contact with, or absorbed by, the fluid-absorbing element. A microwave sensor that allows measuring an amount of fluid that enters in contact with the fluid-absorbing element area, and, in examples, the rate of absorption of such fluid. The applications of the fluid sensing system may comprise a use as a pluviometer, leak detector, characterization of fluids, flow rate sensor, sweat rate sensor, fluid-controlled tunning mechanism for microwave devices such as filters or antennas, etc.

The fluid sensing system allows to characterize an absorbed fluid by means of the tuning of the planar antenna or by means of the frequency shift of the maximum of the antenna realized gain by the provision of at least a portion of a porous fluid-absorbing element embedded in another non-fluid-absorbing substrate, in such a position that at least a portion is exposed to an absorbable liquid or gaseous target fluid. The planar antenna is built on both materials as a non-fluid-absorbing substrate and operates within a frequency range and with a resolution. Both the range and the resolution are determined by the dimensions and the position of the fluid-absorbing element in the structure, including the antenna and the non-fluid-absorbing substrate. The modification of the non-fluid-absorbing substrate by an embedded fluid-absorbing element allows a wireless communication device, located at a certain distance, to extract information related to the characterization of the fluid -liquid or gaseous- from the analysis of signals transmitted by the antenna-sensor through free space, or allows the antenna-sensor to extract information related to the characterization of the fluid - liquid or gaseous-from the analysis of signals received through free space and transmitted by a wireless communication device, located at a certain distance. The shape, size and position of the fluid-absorbing element may be designed to optimize the sensing range and resolution and the planar antenna radiation efficiency. The modification of the non-fluid-absorbing substrate may be made to minimize the decrease of radiation efficiency, due to dielectric losses added by the absorbed fluids.

In some examples the planar antenna further comprises one or more fluid inlets. The fluid inlet may comprise one or more openings configured to allow a fluid passage from a surface on the antenna, for example from the top conductor layer towards the seat where a fluid-absorbing element may be comprised. Some examples may comprise fluid inlets in the form of a grid. Some examples including a cubic seat with heigh H, may comprise a fluid inlet including one or more openings, each opening with a largest dimension comprised within a range of [H/100, 100*H]. These examples advantageously allow the electromagnetic signal to be confined or guided within the planar antenna (i.e., not to be radiated through the inlet). The position and size of the inlets, as well as the position and size of the grid can be used to control the sensor resolution, by adjusting the absorption rate through limiting the portion of the area of the absorbent which is in direct contact with the liquid.

The disclosure comprises an example porous fluid-absorbing element or material, for the characterization of liquids, by embedding said fluid-absorbing element in the non-fluid-absorbing substrate of a planar antenna. The shape, size and position of the fluid-absorbing element in the antenna non-fluid-absorbing substrate can be modified to obtain the desired sensor antenna performance depending on:

- The antenna realized gain, which characterizes the antenna performance. It is the product of the antenna gain, which depends on the antenna radiation efficiency, times the power transmission coefficient, which depends on the antenna impedance matching. In addition, the sensor sensitivity depends on the frequency selectivity of the antenna realized gain.
- The sensor dynamic range (bandwidth) and resolution through adjusting the maximum and minimum achievable resonant frequencies (related to the RG peaks), for the cases in which the absorbent is empty and full of liquid, respectively.
- In a sensor for measuring the rate of liquid absorption, such as a sweat rate sensor, the sensor resolution, by allowing the fine tuning of the antenna resonant frequency (or equivalently the frequency of the peak of the realized gain).

In examples where the planar antenna comprises one or more conductor layers, when positioning or sticking the fluid sensing system on an object or a surface, for example the skin of a person, embedding the fluid-absorbing element in the non-fluid-absorbing substrate maintains the radiation of the planar antenna in the direction opposite to the surface, and prevents the radiation from being absorbed by the fluid-absorbing element, which improves the antenna radiation efficiency. In examples of planar antennas with two conductive layers the electromagnetic fields may be confined inside the non-fluid-absorbing substrate between those two layers, like in a transmission line, before the fields are radiated at discontinuities. Embedding the fluid-absorbing element in the seat of the non-fluid-absorbing substrate between the two conductive layers increases the effect that the absorbed liquid has in the variation of the resonant frequency, due to the strong electromagnetic fields propagating within the structure. This enables reducing the fluid-absorbing element size, and therefore reducing the detrimental effect that the liquid absorption has on the antenna radiation efficiency, while keeping the desired operational bandwidth. In an example, linear dependance of the resonant frequency with the absorbed liquid volume is achieved by placing a cuboid at the shorting end of a PIFA, as will be illustrated in the figures below.

The fluid sensing system may comprise a fluid-absorbing element. The fluid-absorbing element may comprise a porous material capable of absorbing fluids. The fluid-absorbing element may comprise a porous material such as a paper, sponge, textile such as wool, cotton, polyester and other fabrics, or may comprise a hydrogel. The fluid-absorbing element may be embedded in the seat of the non-fluid-absorbing substrate. The fluid-absorbing element may also be referred to as wicking strip or absorbent. The fluid-absorbing element may present any shape that allows it to be embedded in the antenna non-fluid-absorbing substrate, The fluid-absorbing element can present any size, being comprised within, equaling or exceeding the dimensions of the non-fluid-absorbing substrate, and it can be located at any position. A fluid may enter through the top of the antenna, through the bottom of the antenna, or through one of the sides of the non-fluid-absorbing substrate. The dielectric properties of both the fluid-absorbing element and the non-fluid-absorbing substrate may be different, for example, loss tangent and relative permittivity may be different. The fluid-absorbing element may absorb the fluid by capillarity or by pression, or the fluid can be injected.

In a further aspect of the disclosure there is provided a method for determining properties of a fluid, or for determining the absorption rate of a fluid. Determining properties of a fluid may comprise determining an absorbed volume of fluid by a fluid-absorbing element, the fluid absorption rate or the fluid dielectric properties. The method comprises providing the fluid sensing system of the disclosure, embedding a fluid-absorbing element in the seat of the non-fluid-absorbing substrate, where either the transmitting or the receiving antenna are mounted on; transmitting a signal, by a transmitting antenna, at a transmission frequency which may comprise a frequency band; determining fluid properties of the fluid absorbed by the fluid-absorbing element based at least on a frequency of maximum signal reception power, the signal reception power being at least a part of the signal power of the transmitted signal, received by a reception antenna. The transmitter may send the same signal level for all frequency channels of a specific bandwidth, to cover the sensor range. The fluid sensing system of the disclosure provides a planar antenna, also referred to as sensor antenna, with a non-flat response. The non-flat response of the sensor antenna produces a distinguishable peak of maximum signal reception power at the receiver. In presence of a fluid, the frequency of the peak may be shifted a frequency interval that depends on the volume of liquid absorbed by the fluid-absorbing element and the dielectric properties of such liquid. A sweep of frequency measurements may be made to find the frequency of maximum signal reception power. The determination may therefore be based on the frequency shift. Antennas that do not contain the sensor may have a flat response, realized gain constant, in the band and therefore, advantageously, the only modification of the transmitted signal, if any, occurs at the sensor antenna. The signal reception power is at least a fraction of the signal power of the transmitted signal received by a reception antenna.

In examples of the method, transmitting a signal is performed by the planar antenna. In such examples the fluid sensing system of the disclosure comprises a transmitter and a receiver, and the transmitter comprises the planar antenna on the non-fluid-absorbing substrate.

In examples of the method or wherein the signal reception power is the signal power of the transmitted signal received by the planar antenna. In such examples the fluid sensing system of the disclosure comprises a transmitter and a receiver, and the receiver comprises the planar antenna on the non-fluid-absorbing substrate.

In examples of the method or wherein the signal reception power is the signal power of the transmitted signal backscattered by the planar antenna of an RF tag, the fluid sensing system of the disclosure may comprise a first RF communication device initiating the communication to a second RF communication device, and the first communication device receiving back a response of the second communication device, and either the first or the second communication device may comprise the fluid sensing system of the disclosure comprising the planar antenna on the non-fluid-absorbing substrate.

The fluid sensing system and methods of the disclosure may provide many applications including sweat rate sensor, leak detector, pluviometer, dielectric characterization of fluids, hydration sensor, quality control of liquids e.g. beverages and other edible liquids, in bottle stoppers, in wine bottle corks, inside glass or plastic jars.

**BRIEF DESCRIPTION OF THE DRAWINGS**

Examples will now be described, by way of non-limiting example, with reference to the accompanying drawings, in which:

Figure 1 shows a schematic representation of a fluid sensing system 100.
Figure 2 shows a schematic representation of the fluid sensing system 100.
Figure 3 shows an alternative example to figure 2, figure 3 showing the fluid sensing system 100 comprising a transmitter and a receiver.
Figure 4A shows a planar antenna being a dipole 200.
Figure 4B shows a planar antenna being a loop antenna 300.

Figure 5A shows a fluid sensing system at least comprising a planar antenna being a patch antenna 400.

Figure 5B shows a fluid sensing system 100 at least comprising a planar antenna being a PIFA antenna 500.

Figure 5C shows a fluid sensing system 100 at least comprising a planar antenna being a second PIFA antenna 600.

Figure 6 shows a system where a fluid sensing system 100 comprises the second PIFA antenna 600 connected to a transponder 601.

## DETAILED DESCRIPTION

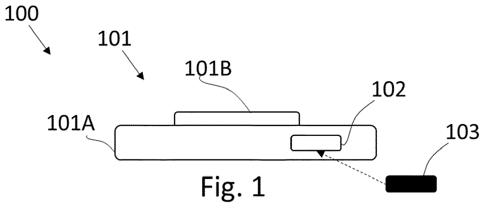

Figure 1 shows a schematic representation of a fluid sensing system 100 comprising a planar antenna 101 comprising a non-fluid-absorbing substrate 101A comprising a seat 102, the seat configured to embed a fluid-absorbing element 103. The planar antenna 101 comprises a conductor layer 101B, or top conductor layer, on the non-fluid-absorbing substrate 101A. The planar antenna has a resonant frequency and the planar antenna is configured to vary the resonant frequency based on fluid absorbed by the fluid-absorbing element, when accommodated in the seat 102.

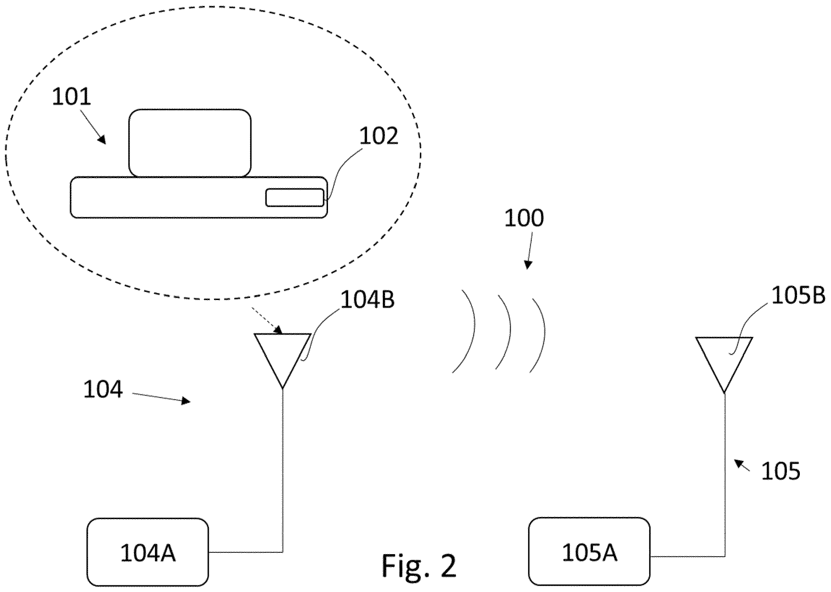

Figure 2 shows a schematic representation of the fluid sensing system 100 comprising a transmitter 104 and a receiver 105. The transmitter 104 comprises a transmitting module 104A and a transmitting antenna 104B. The receiver 105 comprises a receiving module 105A and a receiving antenna 105B. The transmitter 104 transmits electromagnetic signals through the transmitting antenna 104B, the transmitting antenna 104B comprising the planar antenna 101 with the seat 102. The transmitter 104 transmits a signal with a preset power to the receiver 105 to which an antenna is connected. The receiver is configured to receive in the frequency channel in which the transmitter 104 transmits, and it does so for the sequence of transmissions corresponding to the transmitter frequency sweep. To do so, both transmitter and receiver are synchronized. The receiver processes the power received on all channels and records the channel where the highest power is received, which, in a flat response link, occurs at the frequency where there is the best match between the transmitter and the transmitting antenna or planar antenna 101.

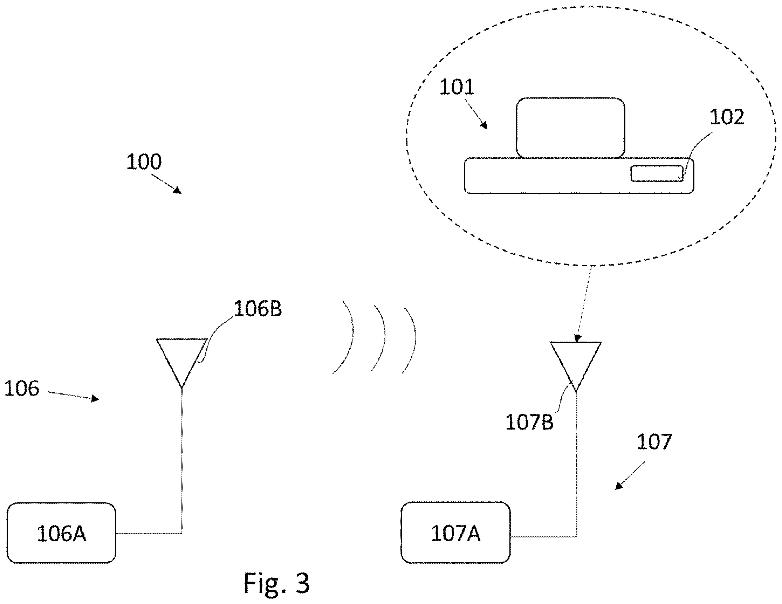

Figure 3 shows an alternative example to figure 2, figure 3 showing the fluid sensing system 100 comprising a second transmitter 106 and a second receiver 107. The second transmitter 106 comprises a second transmitting module 106A and a transmitting antenna 106B. The second receiver 107 comprises a receiving module 107A and a receiving antenna 107B. The second receiver 107 receives electromagnetic signals through the receiving antenna 107B, the receiving antenna 107B comprising the planar antenna 101 with the seat 102. Both transmitter and receiver are synchronized. The receiver processes the power received on all channels and records the channel on which the highest power is received.

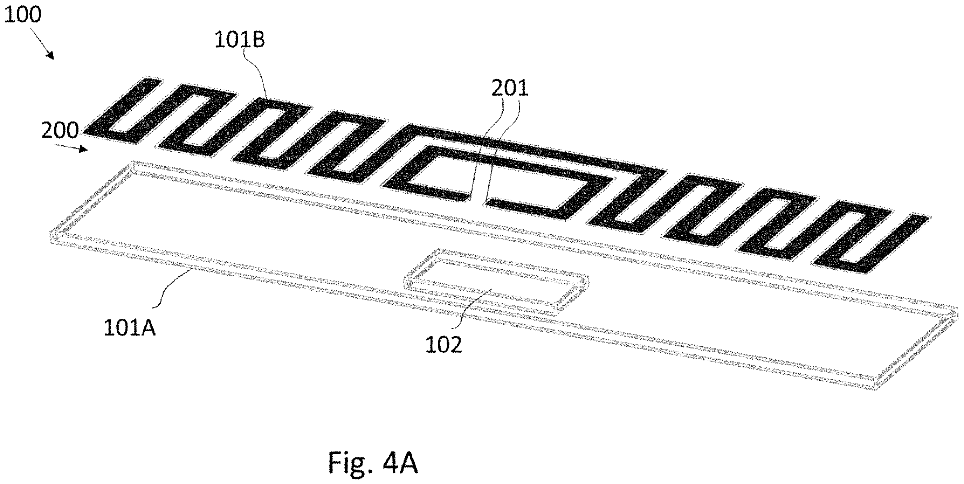

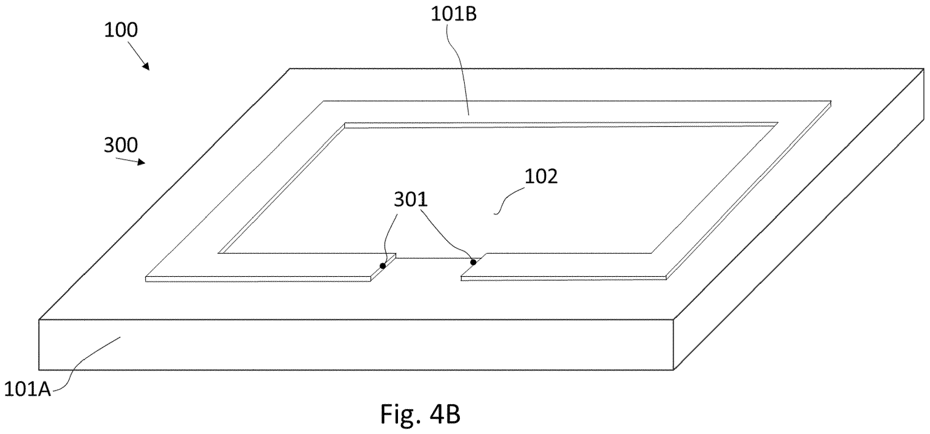

Figure 4A and figure 4B show at least part of examples of the fluid sensing system 100 comprising planar antennas comprising a top conductor layer on the non-fluid-absorbing substrate 101A and the seat 102.

Figure 4A shows a planar antenna being a dipole 200. The planar antenna comprises a loop inductively coupled to a meandered line comprising a top conductor layer 101B being a metallic strip, for example a copper strip, and a non-fluid-absorbing substrate 101A, the non-fluid-absorbing substrate 101A comprising a seat 102. Figure 4A represents a dismantled scheme of the dipole 200 for illustration purposes, but the top conductor layer 101B and the non-fluid-absorbing substrate 101A are configured to be in contact. Figure 4A shows the seat 102 in a position coinciding with a space left by the top conductor layer 101B, but other configurations are possible, for example on a side of the non-fluid-absorbing substrate. A fluid-absorbing element may be in/on the seat 102. The absorbing element may cover the complete inner area of the seat 102. When the fluid-absorbing element absorbs a liquid, the planar antenna varies the resonant frequency based on a volume of fluid absorbed by the fluid-absorbing element. In examples where the fluid sensing system comprises a Radio frequency identification, RFID, tag comprising a meandered line antenna and a high sensitivity chip a transmission range of about 27 m in distance may be provided. Figure 4A shows a representation of simulated terminals 201, which may be connected to any one or more of sources, and/or filters, and/or amplifiers, and/or oscillators; this example terminals advantageously allow connecting the antenna 200 to a further circuit.

Figure 4B shows a planar antenna being a loop antenna 300 comprising a top conductor layer 101B and a non-fluid-absorbing substrate 101A, the non-fluid-absorbing substrate 101A comprising a seat 102. Figure 4B represents the seat 102 in the center of the loop, occupying the entire inner area, but other configurations are possible. A fluid-absorbing element may be in/on the seat 102. The absorbing element may cover the complete inner area of the loop. When the fluid-absorbing element absorbs a liquid, the planar antenna varies the resonant frequency and the radiation efficiency based on a volume and the dielectric properties of fluid absorbed by the fluid-absorbing element. Figure 4B shows a representation of simulated terminals 301 allowing to connect the loop antenna 300 to a further circuit.

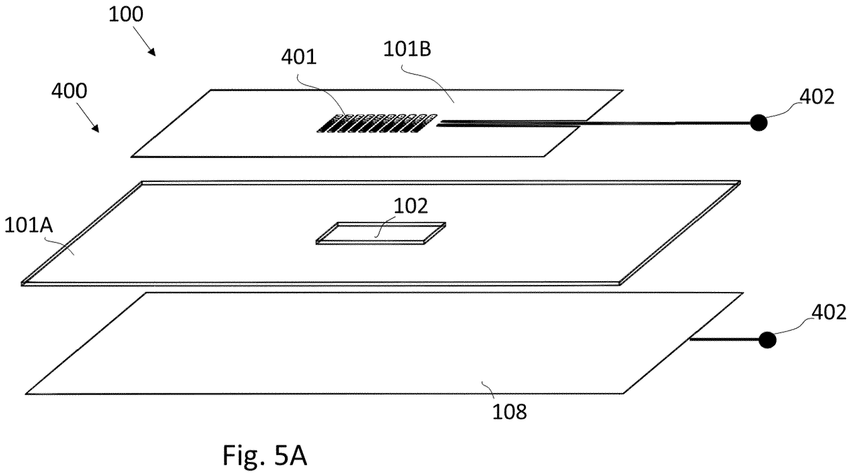

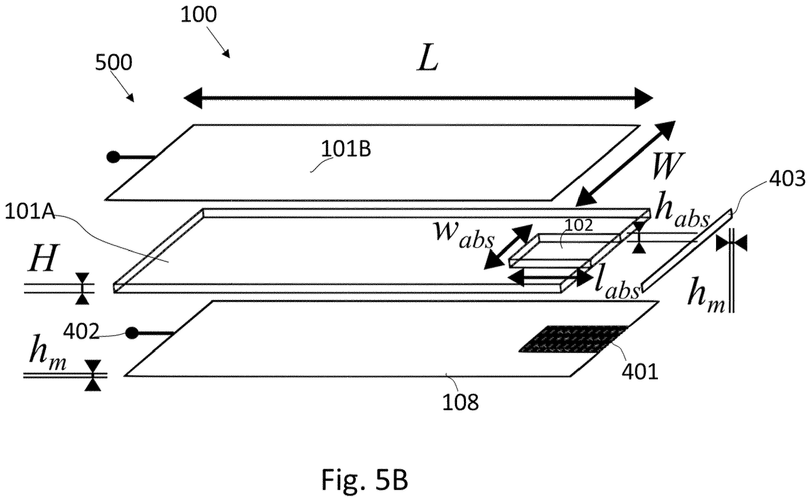

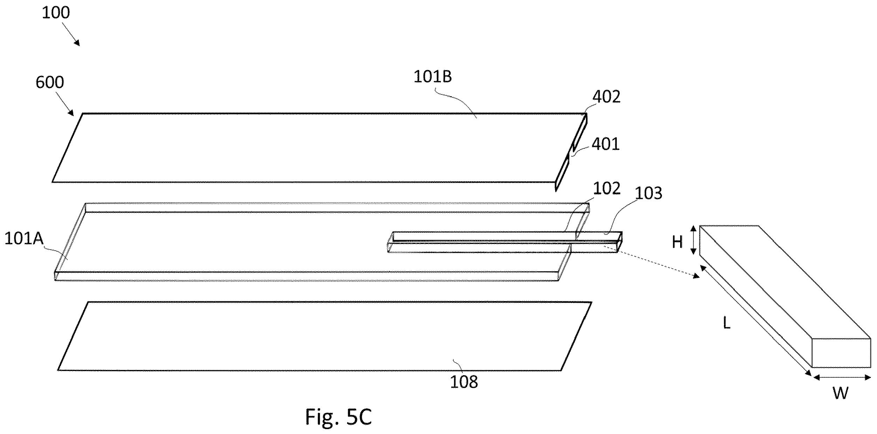

Figures 5A, 5B and 5C show examples of at least part of example fluid sensing systems 100 where the planar antenna 101 comprises a top conductor layer 101B comprising a conductor material, a non-fluid-absorbing substrate 101A on which the top conductor layer 101B rests, the non-fluid-absorbing substrate 101A acting as intermediate layer between the conductor layer 101B and a second layer 108, or ground bottom layer. The second layer or bottom ground layer may comprise one or more conductor materials, for example copper.

Figure 5A shows a fluid sensing system at least comprising a planar antenna being a patch antenna 400, the patch antenna comprising a top conductor layer 101B comprising a conductor material, a non-fluid-absorbing substrate 101A on which the top conductor layer 101B rests, the non-fluid-absorbing substrate 101A acting as intermediate layer between the top conductor layer 101B and a bottom ground layer 108. The patch antenna 400 further comprises a liquid inlet 401. The liquid inlet may comprise one or more openings configured to allow a fluid passage from the surface on top of the top conductor layer 101B in the figure towards the seat 102 where a fluid-absorbing element may be comprised. Figure 5A shows the liquid inlet in the form of a grid, but other shapes are possible. A grid, in the case of the patch antenna 400 allows that fluid may be uniformly absorbed by the entire surface and/or volume of the fluid-absorbing element. Figure 5A represents a dismantled scheme of the patch antenna for illustration purposes, but the top conductor layer 101B, the non-fluid-absorbing substrate 101A and the bottom ground layer 108 are configured to be in contact. Figure 5A shows a representation of simulated terminals 402, which may be connected to any one or more of sources, filters, amplifiers, oscillators... ; this example terminals advantageously allow connecting the antenna to a further circuit. The fluid inlet can be located on the lower or the upper face and consist of a metallic grid or holes in the conductor.

Figure 5B shows a fluid sensing system 100 at least comprising a planar antenna being a PIFA antenna 500, or Planar Inverted F -Antenna, the PIFA antenna 500 comprising a top conductor layer 101B comprising a conductor material, a non-fluid-absorbing substrate 101A on which the top conductor layer 101B rests, the non-fluid-absorbing substrate 101A acting as intermediate layer between the top conductor layer 101B and a bottom ground layer 108. The PIFA antenna 500 further comprises a shorting strip 403 providing an electrical link between the top conductor layer and the ground layer. The PIFA antenna 500 further comprises a liquid inlet 401 in the bottom ground layer 108, but other positions allowing a fluid passage towards the seat 102 are also possible. The liquid inlet is shown in the form of a grid, but other shapes are possible. In operation, when a fluid-absorbing element is positioned or embedded in the seat 102, the liquid inlet 401 in the form of a grid at the bottom ground layer 108 allows a uniform passage of fluid through the grid openings towards the fluid-absorbing element. Figure 5B represents a dismantled scheme of the PIFA antenna 500 for illustration purposes, but the top conductor layer 101B, the non-fluid-absorbing substrate 101A, the bottom ground layer 108 and the shorting strip 403 are configured to be in contact. Figure 5B further shows a representation of simulated terminals 402, which may be connected to any one or more of sources, filters, amplifiers, oscillators... ; this example terminals advantageously allow connecting the antenna to a further circuit. A possible electrical connection to a microchip may allow using the PIFA antenna 500 as an RFID tag antenna. The microchip may be an Alien Higgs-4. Figure 5B shows dimensions L=54 mm, W=30mm, H=1mm, labs=10mm, wabs=10mm, habs=1mm, hm=35um.

Figure 5C shows a fluid sensing system 100 at least comprising a planar antenna being a second PIFA antenna 600, or Planar Inverted F-Antenna, the second PIFA antenna 600 comprising a top conductor layer 101B comprising a conductor material, a non-fluid-absorbing substrate 101A on which the top conductor layer 101B rests, the non-fluid-absorbing substrate 101A acting as intermediate layer between the top conductor layer 101B and a bottom ground layer 108. The second PIFA antenna 600 further comprises a shorting strip 403 providing an electrical link between the top conductor layer and the ground layer. The second PIFA antenna 600 further comprises a liquid inlet 401 in the top conductor layer 101B as an opening allowing the shown fluid-absorbing element 103 to protrude from the antenna through the shorting strip 403. Other positions allowing a fluid passage towards the seat 102, and thereby towards the fluid-absorbing element 103 are also possible. Other shapes are also possible for the inlet. Figure 5C represents a dismantled scheme of the second PIFA antenna 600 for illustration purposes, but the top conductor layer 101B, the non-fluid-absorbing substrate 101A, the bottom ground layer 108 and the shorting strip 403 are configured to be in contact. Figure 5C further shows a representation of simulated terminals 402, which may be connected to any one or more of sources, filters, amplifiers or oscillators. The terminals 402 are shown in a side of the second PIFA antenna 600 opposite to the shorting strip 403 but the terminals may be connected at any position of the second PIFA antenna 600. Figure 5C shows a cubic fluid-absorbing element 103. The thickness of the fluid-absorbing element 103, H, may be equal to the thickness of the non-fluid-absorbing substrate 101A, for example PTFE. The cubic shape of the fluid-absorbing element 103 advantageously provides a uniform absorption of fluid in the longitudinal direction of the fluid-absorbing element 103. The seat 102 comprises a cubic shape comprising a height H 1 mm, a width W 5 mm and a length L 10 mm. The absorbing element of figure 5C comprises the same dimensions H and W and comprises a length L2 25 mm. The fact of embedding the fluid-absorbing element in the seat in the non-fluid-absorbing substrate allows reducing the loss of signal emitted/received by the planar antenna and confining or guiding the electromagnetic fields between the layers comprising a conductor material. In this way, a miniaturization of the planar antenna and thereby a miniaturization of the fluid sensing system is possible while a radiation efficiency is maintained or improved.

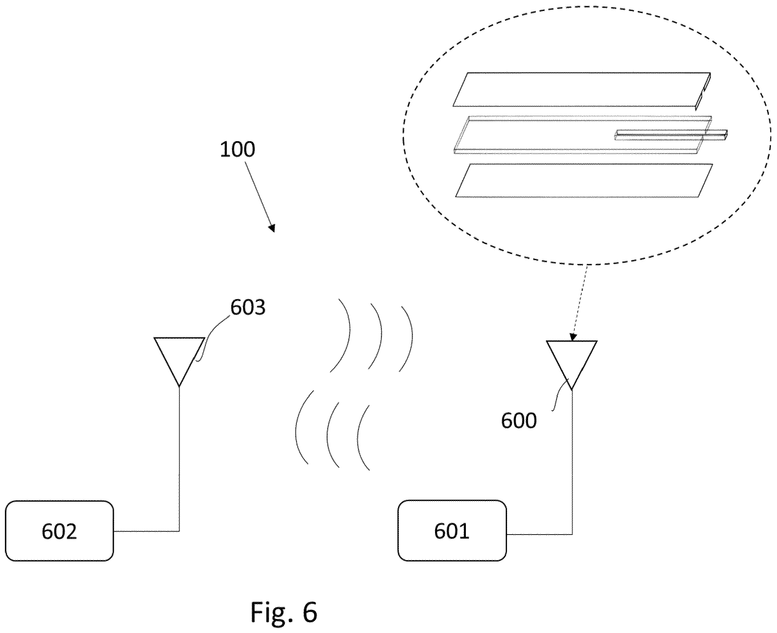

In examples, the fluid sensing system 100 may comprise a transmitter-receiver and a radio frequency transponder or an RF transponder, and wherein either the transmitter-receiver or the RF transponder comprise the planar antenna. Figure 6 shows a fluid sensing system 100 comprising the transmitter-receiver 602 connected to an antenna 603. The transmitter-receiver 602 may comprise any device or apparatus comprising a transmitter and a receiver with respective antennas, or any bistatic device or bistatic apparatus comprising a transmitter-receiver with an antenna, or any device or apparatus comprising a transmitter-receiver with 2 respective antennas. Figure 6 shows a transponder 601. The transponder 601 may be connected to any one of the antennas described herein. In the case of figure 6 the second PIFA antenna 600 is shown connected to the transponder 601, in the example being an RF passive integrated circuit, for example for a backscattering system. The fluid sensing system 100 comprises a transmitter-receiver 602 connected to an antenna 603 that radiates an electromagnetic wave with a preset power; the preset power may be limited by the maximum equivalent radiated isotropic power, EIRP, according to national regulations. The electromagnetic wave is backscattered by the transponder 601 comprising an RFID tag, which includes the second PIFA antenna 600, and then received at the antenna 603. The transmitter-receiver 602, in the example shown form part of an RFID reader device. The receiver processes the power received on all channels and records the channel on which the highest power is received. In the monostatic case the transmitter and receiver are in the same location, but the sensor can also be used in bistatic systems. The RFID tag may be used as a perspiration detection sensor tag for being attached to the skin of a person. In the case of figure 6, the signal reception power is the signal backscattered by the RF transponder 601 containing the second PIFA antenna 600.

The measurement of the sensor can be obtained by two methods. In a first method, by measuring the activation power of the label or turn-on power. In a second method, by measuring the power received at the receiver or received signal strength indicator, RSSI, in a bistatic system or in a monostatic configuration.

In examples, a method for determining fluid properties, is provided. The method comprises providing the fluid sensing system of any of the examples, embedding a fluid-absorbing element in the seat of the non-fluid-absorbing substrate; transmitting a signal, by a transmitting antenna, at an initial transmission frequency f0; and determining fluid properties of a fluid absorbed by the fluid-absorbing element based on a variation of a frequency of maximum signal reception power from the initial transmission frequency f0 to a final received frequency, f1, the signal reception power being at least a part of the signal power of the transmitted signal, received by a reception antenna.

In examples, providing the fluid sensing system comprises providing the planar antenna in a transmitter as transmitting antenna; and comprising transmitting the transmitted signal or the "to be transmitted" signal by the planar antenna.

In examples, providing the fluid sensing system comprises providing the planar antenna in a receiver as reception antenna; and comprising receiving the transmitted signal by the planar antenna.

In examples, providing the fluid sensing system comprises providing the planar antenna in an RF transponder as reception/transmission antenna; and comprising receiving the signal and transmitting the response by the planar antenna.

In examples, determining fluid properties of the fluid absorbed by the fluid-absorbing element comprises determining a volume of fluid absorbed.

In examples where the planar antenna is provided at the receiver, a volume of liquid may be determined by the following method steps:

- upon absorption of the volume of fluid by the absorbing element, determining a final frequency of maximum signal reception, f1, by the receiver
- determining the volume, V, of absorbed fluid based on f1, the volume defined by a relationship defined by

$$\text{frequency of maximum signal reception power } f = g(V);$$

where g(V) is a function modelling the received frequency as a function of a volume of fluid absorbed by the absorbing element.

In examples where the fluid sensing system comprising the planar antenna is provided at the receiver, a rate of absorbed volume of liquid may be determined by determining a volume of absorbed fluid by implementing the method steps for a volume of liquid as explained above, at different consecutive times and determine the rate volume per unit time. For example, the determination may comprise determining an initial frequency of maximum signal reception power, f0. The determination may further comprise, upon absorption of fluid by the fluid-absorbing element, and after 1 second or 2 seconds, determining a first frequency of maximum signal reception power, f1. While the absorbing element continues absorbing fluid, the determination may further comprise, after 1 second or after 2 seconds, determining a second frequency of maximum signal reception power, f2. While the absorbing element continues absorbing fluid, the determination may further comprise, after a number of seconds, determining a third frequency of maximum signal reception power, f3. An absorption fluid rate or speed may be determined by determining, for example, that in for example 2 seconds, the absorbed volume has evolved from V1 corresponding to f1 =g(V1) to V2 corresponding to f2=g(V2). An absorption fluid rate or speed may be determined by determining, for example, that in for example 10 seconds, the absorbed volume has evolved from V0 corresponding to f0=g(V0) to V3 corresponding to f3=g(V3).

In examples, converting the maximum received frequency measurement to the absorbed volume, comprises using the inverse function of g, also referred to as G. The volume V may be expressed as V=G(f). The function g may be obtained by calibration and subsequent analytical modelling, and G may be obtained by inverting g mathematically. Measuring an absorption rate may comprise expressing: absorption_rate = (V3-V0)/(t3-t0) = (G(f3)-G(f0))/(t3-t0).

The function g(V) may have been previously obtained in a calibration process for the specific absorbing element. In addition, the calibration process may have been accounted for a specific fluid. For example, for a cotton absorbing material and dimensions 10×10×1mm3, with a fluid being sweat, and the PIFA antenna 500 with dimensions 53×30×1mm3, g(V) may be modelled as a lineal function g(V)=AV+B from any two points (V,f). For the points corresponding to the limits of the range, A can be (f0-fmin)/(V0-Vmax) and B can be f0. In the case where the fluid is absorbed uniformly along the volume of the absorbing element, a linear function allows an optimum fit between the frequency received and the volume absorbed.

In examples, determining fluid dielectric properties comprises determining the relative permittivity and dissipation factor of a fluid under test (FUT). Determining the relative permittivity may comprise determining a frequency of transmission or reception such that, if the frequency reaches a predetermined range, a determination is made that the fluid-absorbing element has absorbed a substance of a predetermined relative permittivity.

In liquid characterization, g(V) may not be known but it may be measured. For this purpose, test points may be determined empirically by means of a process similar to the calibration process. Known volumes of fluid under test (FUT) may be injected and the frequencies of the maximum received signal may be measured. The equation of the line connecting all the test points (Vi,fi) may then be written, and the slope of the line calculated. The determination of the relative permittivity may be done by a previous calibration process through a tabulation of empirically generated slope-permittivity pairs, or by modelling a function to obtain the relative permittivity=h(x) where x is the slope or angle of inclination of the line g(V). Another more complex method may allow the relative permittivity of the liquid and the loss tangent to be approximated by using an analytical model, for example, an electrical model made up of concentrated and distributed elements, in which the geometrical parameters of the structure, and the dielectric properties of the non-fluid-absorbing substrates, may be used as input variables.

The example antennas of the different figures may be designed for the UHF frequency band. In examples, the frequency range of operation of the fluid sensing systems of the disclosure may comprise an initial frequency of transmission / reception with no fluid absorbed by the fluid-absorbing element f0=928MHz. In examples, when the fluid-absorbing element is completely filled with fluid, a final frequency of transmission / reception of the fluid sensing system may be f_full= 902MHz.

In some examples, a method to manufacture a fluid sensing system may comprise defining a frequency range and measurement resolution. The method may further comprise defining fluid-absorbing element dimensions based on the frequency range and measurement resolution.

In some examples, the method of determining fluid dielectric properties may comprise transmitting, by the transmitter, a signal at a specified frequency or at multiple frequencies within a frequency range; determining a frequency displacement of the received signal with respect to the transmitted signal; completely filling the absorbing element and obtaining the frequency of the received signal peak fmeas=g(Vmax), g being previously defined, for example by any of the disclosed methods of the present disclosure, and fmeas being the measurement frequency or frequency of maximum received signal. In some examples, transmitting a signal at a specified frequency may comprise transmitting a signal in all predefined channels within a frequency range. By transmitting in all the frequency channels, a frequency of maximum signal can be detected.

In some examples, transmitting a signal, by a transmitting antenna, at a transmission frequency is performed by the planar antenna. In other examples the signal reception power is the signal power of the transmitted signal received by the planar antenna.

In examples any of the above fluid sensing systems may be used as a tag on a human body to absorb sweat and determine a sweating rate or perspiration rate.

**Claims**

1. A fluid sensing system (100) comprising

    a planar antenna (101, 200, 300, 400, 500, 600) comprising

        a non-fluid-absorbing substrate (101A), the non-fluid-absorbing substrate (101A) comprising a seat (102), the seat configured to embed a fluid-absorbing element; and
        a conductor layer (101B) on the non-fluid-absorbing substrate (101A),

    the planar antenna having a at least one resonant frequency; and
    wherein the planar antenna is configured to vary the resonant frequency based on fluid absorbed by the fluid-absorbing element.

2. The fluid sensing system (100) of claim 1 comprising a transmitter (104) and a receiver (105), and wherein the transmitter comprises the planar antenna (101, 200, 300, 400, 500, 600).

3. The fluid sensing system (100) of claim 1 comprising a transmitter (106) and a receiver (107), and wherein the receiver comprises the planar antenna (101, 200, 300, 400, 500, 600).

4. The fluid sensing system (100) of claim 1 comprising a transmitter-receiver (602) and a radio frequency, RF, transponder (601), and wherein either the transmitter-receiver (602) or the RF transponder (601) comprise the planar antenna (101, 200, 300, 400, 500, 600).

5. The fluid sensing system (100) of any one of claims 1 to 4 wherein the planar antenna (101) further comprises a second layer (108) comprising a conductor material.

6. The fluid sensing system (100) of any one of claims 1 to 5 wherein the planar antenna (101) further comprises an electrical connection between the second layer (108) and the conductor layer (101B) by one or more conductor materials.

7. The fluid sensing system (100) of any one of claims 1 to 5 wherein the seat (102) comprises a cubic shape comprising a height H, a width W and a length L.

8. The fluid sensing system of any one of claims 1 to 7 wherein the non-fluid-absorbing substrate (101) comprises a dielectric material.

9. The fluid sensing system of any one of claims 4 to 8 wherein the planar antenna (101) comprises a patch antenna (400) or a PIFA antenna (500, 600).

10. A method for determining fluid properties, the method comprising:

   - providing a fluid sensing system according to any of claims 1 to 9,
   - embedding a fluid-absorbing element in the seat of the non-fluid-absorbing substrate; and
   - determining properties of fluid absorbed by the fluid-absorbing element based at least on a frequency of maximum signal reception power, the signal reception power being at least a part of the signal power of a transmitted signal, received by a reception antenna.

11. The method of claim 10 wherein providing the fluid sensing system comprises providing the planar antenna in a transmitter as transmitting antenna; and comprising transmitting the transmitted signal by the planar antenna.

12. The method of claim 10 wherein providing the fluid sensing system comprises providing the planar antenna in a receiver as reception antenna; and comprising receiving the transmitted signal by the planar antenna.

13. The method of claim 10 wherein providing the fluid sensing system comprises providing the planar antenna connected to an RF transponder; and the method may further comprise receiving and transmitting the transmitted signal by the planar antenna.

14. The method of any of claims 10 to 13 wherein the frequency of maximum signal reception power is comprised in a range from 800 to 1000 MHz, or from 1 to 3 GHz, or from 3 to10 GHz, or from 10 to 100 GHz.

15. The method of any of claims 10 to 14,

   - comprising transmitting a signal, by the planar antenna, at a transmission frequency or at a plurality of frequencies within a frequency range; or
   - wherein the signal reception power is the signal power of the transmitted signal received by the planar antenna; or wherein
   - the signal reception power is the signal backscattered by a radio frequency, RF, transponder (601) connected to the planar antenna.

Fig. 1

105B
105
105A
100
104B
104A
104
102
101

Fig. 2

Fig. 3

Fig. 4A

Fig. 4B

Fig. 5A

Fig. 5B

Fig. 5C

Fig. 6

**Europäisches Patentamt**
**European Patent Office**
**Office européen des brevets**

# EUROPEAN SEARCH REPORT

Application Number

**EP 23 38 2863**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEN YIZHU ET AL: "Triple-Resonance Chipless RFID Tag With Dual Circularly-Polarized Wideband Reader Antenna for Wirelessly Differentiating Liquid", IEEE JOURNAL OF RADIO FREQUENCY IDENTIFICATION, IEEE, vol. 5, no. 2, 4 November 2020 (2020-11-04), pages 154-162, XP011856370, DOI: 10.1109/JRFID.2020.3035190 [retrieved on 2021-05-24] * figure 1 * * figure 2 * * figure 4a * * figure 5 * * Section II * * Section III * * Section IV * * Section V * | 1-15 | INV. H01Q1/22 H01Q9/04 G01N27/22 G06K19/07 ADD. H01Q9/42 H01Q7/00 |
| A | US 2017/162931 A1 (YOUNG BRIAN DAVID [US] ET AL) 8 June 2017 (2017-06-08) * page 3; figure 3 * * figure 4 * * paragraph [0035] – paragraph [0050] * | 2,3,11, 12 | |

TECHNICAL FIELDS SEARCHED (IPC)

H01Q
G01N
G06K

-/--

The present search report has been drawn up for all claims

| Place of search | Date of completion of the search | Examiner |
|---|---|---|
| The Hague | 22 January 2024 | Kalialakis, Christos |

EPO FORM 1503 03.82 (P04C01)

Europäisches
Patentamt

European
Patent Office

Office européen
des brevets

## EUROPEAN SEARCH REPORT

Application Number

EP 23 38 2863

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHANG K ET AL: "ANTENNAS FOR UBIQUITOUS SENSOR NETWORK", IEICE TRANSACTION ON COMMUNICATION, COMMUNICATIONS SOCIETY, TOKYO, JP, vol. E91B, no. 6, 1 June 2008 (2008-06-01) , pages 1697-1704, XP001513978, ISSN: 0916-8516, DOI: 10.1093/IETCOM/E91-B.6.1697 * figure 10 * * figure 11 * * figure 12 * * Section 3.1 * | 9 | |
| A | US 2022/109240 A1 (RFMICRON INC [US]) 7 April 2022 (2022-04-07) * paragraph [0156] * * figure 23 * | 1-15 | |

TECHNICAL FIELDS
SEARCHED      (IPC)

The present search report has been drawn up for all claims

| Place of search | Date of completion of the search | Examiner |
|---|---|---|
| The Hague | 22 January 2024 | Kalialakis, Christos |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 38 2863**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-01-2024**

| Patent document cited in search report | Publication date | Patent family member(s) | Publication date |
|---|---|---|---|
| US 2017162931 A1 | 08-06-2017 | NONE | |
| US 2022109240 A1 | 07-04-2022 | NONE | |

EPO FORM P0459

For more details about this annex : see Official Journal of the European Patent Office, No. 12/82